# FASCICULE DE BREVET EUROPEEN

(11) **EP 0 898 890 B1**
(45) Date de publication et mention de la délivrance du brevet: **08.01.2003**
(21) Numéro de dépôt: 97202715.5
(22) Date de dépôt: 31.08.1997
(51) Int. Cl.: A21C 3/04, A23P 1/12, A21C 11/16

(54) **Filière d'extrusion**
Extrusionsdüse
Extrusion die

(43) Date de publication de la demande: 03.03.1999
(73) Titulaire: SOCIETE DES PRODUITS NESTLE S.A., 1800 Vevey (CH)
(72) Inventeur: Deutsch, Roman, 1095 Lutry (CH); Heck, Ernst, 1302 Vufflens-la-Ville (CH); Horisberger, Jean, 1024 Ecublens (CH)
(74) Mandataire: Wavre, Claude-Alain

(56) Documents cités:
- EP-A- 0 202 143
- EP-A- 0 434 983
- WO-A-94/14324
- WO-A-96/39039
- US-A- 3 541 946

## Description

La présente invention a pour objet une filière d'extrusion, un extrudeur comprenant au moins une telle filière et un produit susceptible d'être obtenu par extrusion au travers d'une telle filière.

EP0169126 (CLEXTRAL) décrit un procédé et une installation de fabrication d'un produit alimentaire composite à partir d'un cuiseur-extrudeur monovis ou bivis, dans lequel un flux de matière est traité dans une première zone de traitement traditionnelle du cuiseur-extrudeur, ce flux est divisé en deux dans une deuxième zone comprenant deux chambres de traitement parallèles distinctes, les flux sont traités, notamment colorés différemment dans leurs chambres de traitement respectives et les flux sont réunis lors de leur extrusion au travers d'une filière à orifice de sortie unique ou une filière de coextrusion.

WO 94 14324 A décrit une filière de coextrusion comprenant une plaque frontale amovible présentant un évidement circulaire entourant l'extrémité d'un tube d'extrusion concentrique, l'évidement circulaire s'évasant vers l'intérieur et définissant par rapport à la surface extérieure du tube un orifice d'extrusion annulaire généralement conique convergent.

EP-A-0 434 983 décrit une filière de coextrusion dans laquelle deux conduits d'extrusion respectivement axial et coaxial, alimentés par l'intermédiaire de chambres de distribution adéquates débouchent sur un passage tubulaire unique se terminat par un orifice d'extrusion circulaire unique duquel peut déboucher un produit tubulaire rempli d'une garniture centrale.

La présente invention a pour but de proposer une filière d'extrusion permettant de produire par extrusion d'une matière unitaire un produit présentant une forme tridimensionnelle particulièrement attractive, à savoir une forme générale de noyau entouré d'un anneau.

A cet effet, la filière d'extrusion selon la présente invention, comprenant un diaphragme d'alimentation s'ouvrant sur une chambre de distribution communiquant d'une part avec un conduit d'extrusion central généralement conique convergent, par l'intermédiaire d'un diaphragme central circulaire de préexpansion et/ou ralentissement, et communiquant d'autre part avec au moins un conduit d'extrusion tubulaire coaxial généralement conique convergent, par l'intermédiaire d'au moins un diaphragme annulaire de préexpansion et/ou ralentissement, les conduits d'extrusion central et tubulaire coaxial > présentant des orifices de sortie respectifs central et annulaire concentriques, est remarquable par le fait que l'ouverture des diaphragmes de préexpansion et/ou ralentissement et/ou des orifices de sortie, et/ou la distance entre les plans des orifices de sortie sont ajustables en sorte que la découpe simultanée d'un boudin central débouchant de l'orifice de sortie central et d'un boudin tubulaire coaxial débouchant de l'orifice de sortie annulaire produise un noyau entouré d'un anneau solidaire de son pourtour.

De même, l'extrudeur selon la présente invention comprend un fourreau allongé renfermant une ou deux vis de traitement, et au moins une telle filière d'extrusion.

Enfin, le produit selon la présente invention, susceptible d'être obtenu par extrusion au travers d'une telle filière, présente la forme générale d'un noyau entouré d'un anneau.

Dans le présent exposé, le terme "diaphragme" est à comprendre comme un élément de conduite dont le diamètre se ressert sur un orifice d'ouverture réduite, réalisable notamment sous forme d'insert dans lequel est prévu un orifice sur lequel converge une paroi généralement conique amont et duquel diverge une paroi généralement conique aval.

L'expression "préexpansion et/ou ralentissement" signifie une expansion préliminaire et/ou un ralentissement d'une masse de matière traitée dans un extrudeur qui se produit à un stade intermédiaire, avant la sortie de la filière d'extrusion. Une telle préexpansion et/ou un tel ralentissement peut être provoquée par le passage de la masse au travers d'un diaphragme débouchant sur un espace ou chambre de préexpansion et/ou ralentissement défini par une paroi divergente telle que mentionnée ci-dessus ou sur un espace encore plus large prévu immédiatement en aval du diaphragme, par exemple.

L'expression "des orifices de sortie central et annulaire concentriques" signifie un orifice de sortie central, situé dans un plan généralement perpendiculaire à l'axe de la filère et centré sur cet axe, et au moins un orifice annulaire, situé également dans un plan généralement perpendiculaire à l'axe de la filière et centré aussi sur cet axe. Ces orifices peuvent présenter des formes variées telles que cercle, ovale, ellipse, coeur, triangle, huit, pétales de fleurs ou leurs combinaisons telle qu'une marguerite avec un orifice central circulaire et un orifice annulaire en forme de pétales, par exemple.

L'expression "vis de traitement" est à comprendre comme la ou les vis de l'extrudeur entraînées en rotation à l'intérieur d'un alésage ou de deux alésages sécants prévus dans le fourreau et sur la ou lesquelles sont fixés des organes de traitement tels que des filets enroulés en hélice autour de leur axe. La configuration, le pas, la profondeur et le sens de tels filets peuvent être prévus de diverses manières le long de l'axe de manière à définir des zones de traitements divers tels que transport, humidification, mélange, cisaillement, compression et/ou cuisson, par exemple. De telles vis peuvent être réalisées en une seule pièce ou par assemblage d'éléments enfilés successivement sur un axe, par exemple.

Dans une forme de réalisation de la présente filière comprenant un conduit d'extrusion tubulaire coaxial, l'ouverture des diaphragmes de préexpansion et/ou ralentissement et/ou des orifices de sortie, et/ou la distance entre les plans des orifices de sortie sont ajustables en sorte que la découpe simultanée d'un boudin central débouchant de l'orifice de sortie central et d'un boudin tubulaire coaxial débouchant d'un orifice de sortie annulaire concentrique produise un noyau entouré d'un anneau solidaire de son pourtour.

Dans une forme de réalisation préférée de la filière comprenant plusieurs conduits d'extrusion tubulaires coaxiaux, l'ouverture des diaphragmes de préexpansion et/ou ralentissement et/ou des orifices de sortie, et/ou la distance entre les plans des orifices de sortie sont ajustables en sorte que la découpe simultanée d'un boudin central débouchant de l'orifice de sortie central et de plusieurs boudins tubulaires coaxiaux débouchant de plusieurs orifices de sortie annulaires concentriques produise un noyau entouré de plusieurs anneaux concentriques solidaires de proche en proche.

L'ajustabilité de ces ouvertures et distances peut également permettre d'influencer la texture du produit, en particulier le degré d'expansion d'un produit cuit-extrudé, par exemple.

On peut supposer qu'un ajustement adéquat de ces ouvertures et distances qui permet de produire un noyau entouré d'un anneau solidaire de son pourtour ou un noyau entouré de plusieurs anneaux concentriques solidaires de proche en proche est un ajustement qui confère aux boudins sortant de l'orifice central et de l'orifice annulaire concentrique des vitesses respectives notablement différentes, par exemple.

Dans la présente filière, le conduit d'extrusion central peut être délimité par la paroi intérieure d'une buse intérieure et un conduit d'extrusion tubulaire coaxial peut être délimité par la paroi intérieure d'une buse extérieure et par la paroi extérieure d'une buse intérieure, par exemple.

L'orifice de sortie central peut être délimité par l'extrémité d'une buse intérieure et un orifice de sortie annulaire peut être délimité par les extrémités de buses intérieure et extérieure.

L'ouverture des diaphragmes de préexpansion et/ou ralentissement peut être ajustable par substitution d'inserts dans lesquels ces diaphragmes sont formés.

L'ouverture des orifices de sortie peut être ajustable par substitution de buses intérieure et extérieure.

Enfin, la distance entre les plans des orifices de sortie peut être ajustable par déplacement axial relatif de buses intérieure et extérieure.

L'extrudeur selon la présente invention comprend donc un fourreau allongé renfermant une ou deux vis de traitement, et au moins une filière d'extrusion selon la présente invention. De préférence, il comprend en outre des moyens de découpe qui peuvent être réalisés sous forme d'un couteau rotatif tournant contre les orifices de sortie, par exemple.

Dans une forme de réalisation préférée de l'extrudeur comprenant plusieurs filières, une partie aval du fourreau renfermant une extrémité aval de la ou des vis de traitement se termine par une plaque frontale solidaire du fourreau dans laquelle est prévu un orifice de prédistribution s'ouvrant sur une chambre de prédistribution communiquant avec les chambres de distribution des filières par l'intermédiaire des diaphragmes d'alimentation.

L'orifice de prédistribution peut s'ouvrir sur la chambre de prédistribution par l'intermédiaire d'un diaphragme de prédistribution qui peut être ajustable par substitution d'insert dans lequel il est formé, par exemple.

Le produit selon la présente invention susceptible d'être obtenu par extrusion au travers de la présente filière présente donc la forme générale d'un noyau entouré d'un anneau.

De préférence, le produit est obtenu par extrusion d'une matière destinée à l'alimentation humaine ou animale traitée de manière adéquate par les vis de traitement d'un extrudeur qui fournissent en outre l'énergie mécanique nécessaire pour la faire passer au travers de la filière.

On peut envisager diverses formes de réalisations particulières du présent produit telles que des céréales cuites-extrudées, des pâtes alimentaires, des croquettes pour animaux familiers ou des granules pour animaux d'élevage tels que bétail, volaille ou poisson, par exemple.

Dans une forme de réalisation préférée, le présent produit est une céréale expansée pour petit déjeuner susceptible d'être obtenue par cuisson-extrusion d'un mélange à base de farine de céréale et d'eau dans un cuiseur-extrudeur comprenant une ou plusieurs filières selon la présente invention.

Un tel mélange à base de farine et d'eau peut comprendre de 7-20% d'eau, jusqu'à 70% de farine de maïs, jusqu'à 70% de farine de blé, jusqu'à 12% de saccharose, jusqu'à 10% d'huile, ainsi que du sel, des épices et des oligoéléments, par exemple. On peut utiliser aussi de la farine de riz, d'avoine, d'orge et/ou de pomme de terre et y ajouter d'autres ingrédients tels qu'amidons, glucose, malt, graisse, agents colorants et/ou agents aromatisants, par exemple.

La cuisson-extrusion peut être réalisée dans un cuiseur-extrudeur présentant un quotient longueur sur diamètre des vis d'environ 10-14, avec une vitesse de rotation des vis de 140-250 rpm, sous une pression de 40-180 bar, à 105-180°C, et avec une teneur en eau du produit à la sortie de la filière comprise entre 5 et 12%, par exemple.

La filière, l'extrudeur et le produit selon la présente invention sont décrits ci-après en référence au dessin annexé présenté à titre d'exemple et dans lequel:
Les figures 1 et 2 sont deux vues en coupe axiale d'une même forme de réalisation de la filière, correspondant à deux positions relatives différentes des orifices de sortie,
la figure 3 est une vue en coupe axiale partielle d'une forme de réalisation d'un extrudeur comprenant plusieurs filières,
la figure 4 est une vue de face d'une forme de réalisation du produit,
la figure 5 est une vue de côté de la forme de réalisation du produit représenté à la figure 4,
la figure 6 est une vue de face de différentes formes de réalisation du produit,
les figures 7 et 8 sont une vue en coupe selon la ligne VI-VI de deux formes de réalisation particulières du produit en forme de triangle représenté à la figure 6, et
la figure 9 est une vue de face d'une autre forme de réalisation du produit.

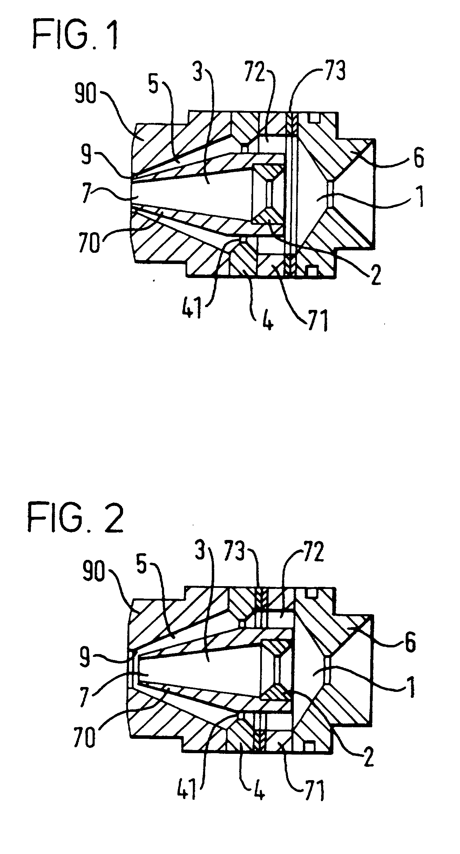

Dans la forme de réalisation représentée aux figures 1 et 2, la filière d'extrusion comprend un diaphragme d'alimentation 6 s'ouvrant sur une chambre de distribution 1 communiquant d'une part avec un conduit d'extrusion central 3 généralement conique convergent, par l'intermédiaire d'un diaphragme central circulaire 2 de préexpansion et/ou ralentissement, et communiquant d'autre part avec un conduit d'extrusion tubulaire coaxial 5 généralement conique convergent, par l'intermédiaire d'un diaphragme annulaire 4 de préexpansion et/ou ralentissement, les conduits d'extrusion central 3 et tubulaire coaxial 5 présentant des orifices de sortie respectifs central 7 et annulaire 9 concentriques.

Le conduit d'extrusion central 3 est délimité par la paroi intérieure d'une buse intérieure 70. Le conduit d'extrusion tubulaire coaxial 5 est délimité par la paroi intérieure d'une buse extérieure 90 et par la paroi extérieure de la buse intérieure 70.

La buse intérieure 70 est solidaire d'un disque de positionnement 71 percé de trous 72 assurant la communication entre la chambre de distribution 1 et l'orifice annulaire 41 du diaphragme annulaire 4.

L'orifice de sortie central 7 est délimité par l'extrémité de la buse intérieure 70. L'orifice de sortie annulaire 9 est délimité par les extrémités des buses intérieure et extérieure 70 et 90.

La distance entre les plans des orifices de sortie 7 et 9 est ajustable par déplacement axial relatif des buses intérieure 70 et extérieure 90. En l'occurrence, le déplacement axial de la buse intérieure 70 par rapport à la buse extérieure 90 est ajustable par l'intermédiaire d'une bague de compensation telle que la bague 73 que l'on peut positionner derrière (figure 1) ou devant (figure 2) le disque de positionnement 71.

Ainsi, dans la position représentée à la figure 1, les orifices de sortie central 7 et annulaire concentrique 9 sont situés dans le même plan, alors que dans la position représentée à la figure 2, l'orifice de sortie central 7 est situé en retrait de l'orifice de sortie annulaire concentrique 9.

L'ouverture des diaphragmes de préexpansion et/ou ralentissement 2 et 4 est ajustable par substitution d'inserts dans lesquels ces diaphragmes sont formés.

L'ouverture des orifices de sortie est ajustable par substitution de buses intérieure 70 et extérieure 90.

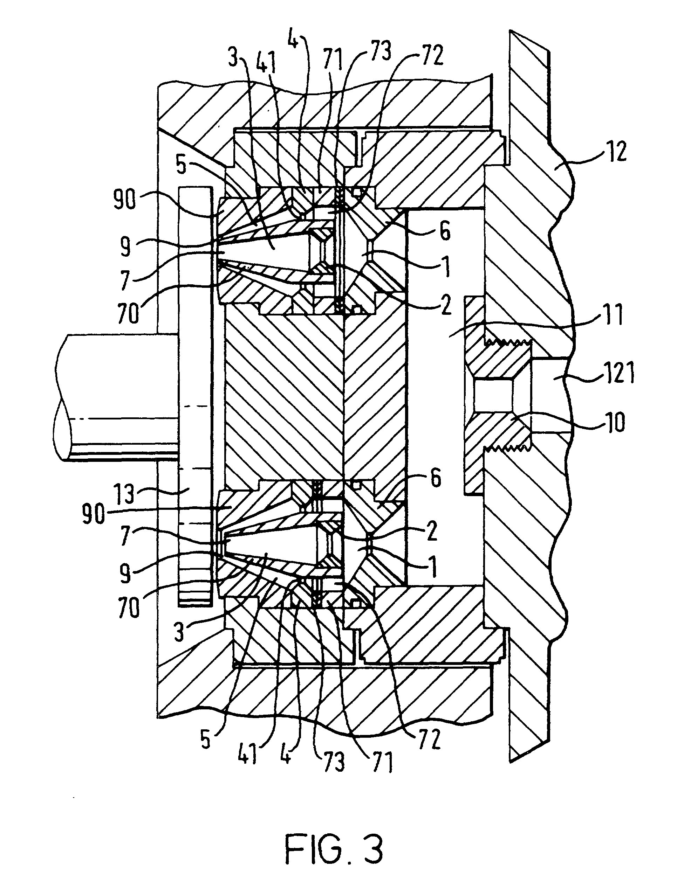

Dans la forme de réalisation représentée à la figure 3, l'extrudeur comprend un fourreau allongé (non représenté) renfermant une ou deux vis de traitement (non représentées), et plusieurs filières d'extrusion telles que représentées aux figures 1 et 2. La partie aval du fourreau renfermant la partie aval de la ou des vis de traitement se termine par une plaque frontale 12 solidaire du fourreau dans laquelle est prévu un orifice de prédistribution 121 s'ouvrant, par l'intermédiaire d'un diaphragme de prédistribution 10, sur une chambre de prédistribution 11 communiquant avec les chambres de distribution 1 des filières par l'intermédiaire des diaphragmes d'alimentation 6.

L'extrudeur comprend en outre des moyens de découpe réalisés sous forme d'un couteau rotatif 13 tournant contre les orifices de sortie 7 et 9.

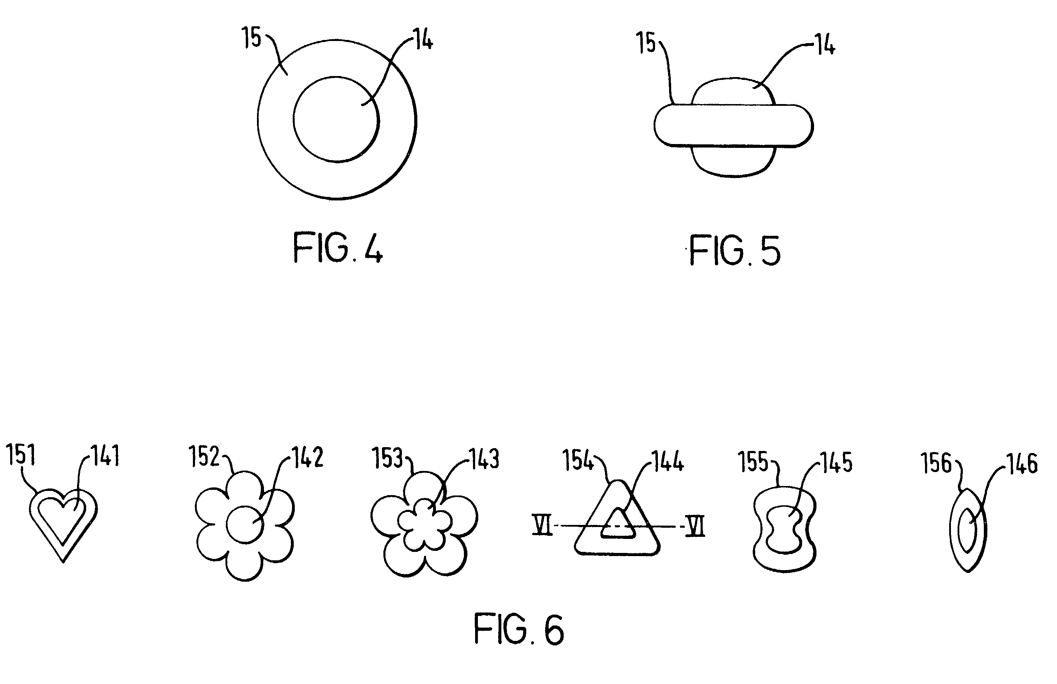

On a représenté aux figures 4 et 5 une forme de réalisation du produit susceptible d'être obtenu par extrusion au travers d'une filière telle que représentée aux figures 1 et 2, dans laquelle le noyau présente la forme d'une sphère 14. L'anneau 15 solidaire du pourtour de la sphère 14 donne au produit un aspect attractif rappelant celui de la planète saturne avec son anneau.

On a représenté à la figure 6 différentes formes de réalisation du produit susceptibles d'être obtenues par extrusion au travers d'une filière semblable à celle représentée aux figures 1 et 2 exception faite de la forme précise des orifices de sortie, dans lesquelles le noyau présente une forme de coeur 141, sphère 142, trèfle à cinq 143, triangle 144, huit 145, ainsi qu'ellipse 146.

Les anneaux solidaires du pourtour de ces noyaux présentent des formes respectives correspondantes de coeur 151, trèfle à cinq 153, triangle 154, huit 155, ainsi qu'ellipse 156, à l'exception d'une forme de couronne à six pétales 152 solidaire du pourtour d'une sphère 142 qui donne à la céréale l'aspect d'une fleur composée à six pétales.

Tous ces produits présentent un aspect particulièrement attractif grâce à la présence de l'anneau solidaire du pourtour du noyau.

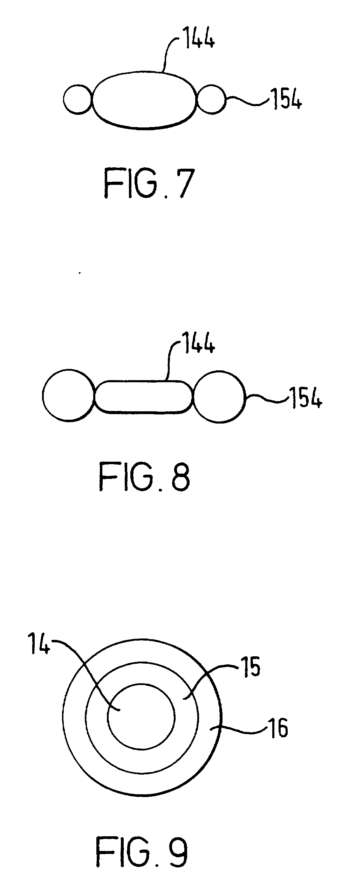

On a représenté aux figures 7 et 8 deux formes de réalisation particulières du produit en forme de triangle représenté à la figure 6 dans lesquelles le noyau triangulaire 144 apparaît en relief convexe (figure 7) ou concave (figure 8) dans l'anneau triangulaire 154 solidaire de son pourtour.

Enfin, on a représenté à la figure 9 une autre forme de réalisation du produit susceptible d'être obtenue par extrusion au travers d'une forme particulière de réalisation de la filière comprenant deux conduits d'extrusion tubulaires coaxiaux, dans laquelle le noyau présente la forme d'une sphère 14 entourée de deux anneaux 15 et 16 solidaires de proche en proche.

L'exemple ci-après illustre la possible obtention d'une forme préférée du présent produit, en l'occurrence une céréale expansée pour petit déjeuner, par cuisson-extrusion d'un mélange à base de farine et d'eau dans un cuiseur - extrudeur comprenant plusieurs filières selon la présente invention. Dans cet exemple, de même que dans tout le présent exposé, les pourcentages et parties sont indiqués en poids.

### Exemple

A l'aide d'un cuiseur-extrudeur bivis comprenant plusieurs filières tel qu'illustré à la figure 3, on produit des céréales expansées présentant la forme d'une sphère entourée d'un anneau telle qu'illustrée aux figures 4 et 5.

Pour ce faire, on prépare un mélange présentant la composition suivante:

| | |
|---|---|
| Eau | 13% |
| Farine de maïs | 40% |
| Farine de blé | 25% |
| Sucre | 10% |
| Huile | 5% |
| Sel/épices | 7% |

On le cuit-extrude dans les conditions suivantes:

### Configuration des filières;

Diamètre de l'orifice circulaire du diaphragme de prédistribution: 14 mm,
diamètre de l'orifice circulaire des diaphragmes d'alimentation: 8 mm,
diamètre de l'orifice circulaire des diaphragmes centraux de préexpansion et/ou ralentissement: 8 mm,
diamètres intérieur et extérieur des orifices annulaires des diaphragmes annulaires de préexpansion et/ou ralentissement: 26/28 mm,
diamètre des orifices de sortie centraux: 8 mm,
diamètres intérieur et extérieur des orifices de sortie annulaires: 9/11 mm, et
distance entre les plans des orifices de sortie centraux et annulaires: 1 mm.

### Conditions d'extrusion :

Quotient longueur sur diamètre des vis: 10,
vitesse de rotation des vis: 160 rpm,
pression: 120 bar,
température: 150°C, et
teneur en eau à la sortie de la filère: 7%.

On obtient ainsi des céréales expansées en forme de sphère entourée d'un anneau présentant un aspect attractif rappelant celui de la planète saturne avec son anneau.

## Revendications

1. Filière d'extrusion comprenant un diaphragme d'alimentation (6) s'ouvrant sur une chambre de distribution (1) communiquant d'une part avec un conduit d'extrusion central (3) généralement conique convergent, par l'intermédiaire d'un diaphragme central circulaire (2) de préexpansion et/ou ralentissement, et communiquant d'autre part avec au moins un conduit d'extrusion tubulaire coaxial (5) généralement conique convergent, par l'intermédiaire d'au moins un diaphragme annulaire (4) de préexpansion et/ou ralentissement, les conduits d'extrusion central (3) et tubulaire coaxial (5) présentant des orifices de sortie respectifs central (7) et annulaire (9) concentriques, le terme "diaphragme" étant à comprendre comme un élément de conduite dont le diamètre se ressert sur un orifice d'ouverture réduite, **caractérisée par le fait que**, l'ouverture des diaphragmes de préexpansion et/ou ralentissement et/ou des orifices de sortie, et/ou la distance entre les plans des orifices de sortie sont ajustables en sorte que la découpe simultanée d'un boudin central débouchant de l'orifice de sortie central et d'un boudin tubulaire coaxial débouchant de l'orifice de sortie annulaire produise un noyau entouré d'un anneau solidaire de son pourtour.

2. Filière selon la revendication 1, comprenant plusieurs conduits d'extrusion tubulaires coaxiaux, dans laquelle l'ouverture des diaphragmes de préexpansion et/ou ralentissement et/ou des orifices de sortie, et/ou la distance entre les plans des orifices de sortie sont ajustables en sorte que la découpe simultanée d'un boudin central débouchant de l'orifice de sortie central et de plusieurs boudins tubulaires coaxiaux débouchant de plusieurs orifices de sortie annulaires concentriques produise un noyau entouré de plusieurs anneaux concentriques solidaires de proche en proche.

3. Extrudeur, comprenant un fourreau allongé renfermant une ou deux vis de traitement, et au moins une filière d'extrusion selon l'une des revendications 1 et 2.

4. Extrudeur selon la revendication 3, comprenant plusieurs filières et un couteau rotatif (13) tournant contre leurs orifices de sortie, dans lequel une partie aval du fourreau renfermant une extrémité aval de la ou des vis de traitement se termine par une plaque frontale (12) solidaire du fourreau dans laquelle est prévu un orifice de prédistribution (121) s'ouvrant sur une chambre de prédistribution (11) communiquant avec les chambres de distribution (1) des filières par l'intermédiaire des diaphragmes d'alimentation (6).

## Claims

1. Extrusion die comprising a feed diaphragm (6) which opens onto a distribution chamber (1) which communicates firstly with a central extrusion duct (3) which is generally convergent conical, by means of a circular central diaphragm (2) for pre-expansion and/or slowing down, and communicates secondly with at least one coaxial tubular extrusion duct (5) which is generally convergent conical, by means of at least one annular diaphragm (4) for pre-expansion and/or slowing down, the central (3) and coaxial tubular (5) extrusion ducts having respective concentric central (7) and annular (9) output apertures, **characterised in that** the opening of the diaphragms for pre-expansion and/or slowing down and/or of the output apertures, and/or the distance between the planes of the output apertures, can be adjusted such that simultaneous cutting off of a central extruded piece which is discharged from the central output aperture and of a coaxial tubular extruded piece which is discharged from the annular output aperture produces a core which is surrounded by an annular ring which is integral with its periphery.

2. Die according to claim 1, comprising a plurality of coaxial tubular extrusion ducts, wherein the opening of the diaphragms for pre-expansion and/or slowing down and/or of the output apertures, and/or the distance between the planes of the output apertures, can be adjusted such that simultaneous cutting off of a central extruded piece which is discharged from the central output aperture and of a plurality of coaxial tubular extruded pieces which are discharged from a plurality of concentric annular output apertures produces a core surrounded by a plurality of concentric rings which are integral by degrees.

3. Extruder, comprising an elongate sleeve which contains one or two processing screws, and at least one extrusion die according to one of claims 1 and 2.

4. Extruder according to claim 3, comprising a plurality of dies and a rotary blade (13) which rotates against the output apertures of the latter, wherein a downstream part of the sleeve which contains a downstream end of the processing screw(s) ends in a front plate (12) which is integral with the sleeve, in which plate there is provided a pre-distribution aperture (121) which opens onto a pre-distribution chamber (11) which communicates with the distribution chambers (1) of the dies by means of the feed diaphragms (6).

## Patentansprüche

1. Extrusionsdüse mit einer Versorgungslochblende (6), die sich in eine Verteilungskammer (1) öffnet, die einerseits über eine kreisförmige zentrale Lochblende (2) zur Vorexpandierung und/oder zur Verlangsamung mit einem allgemein konischen, sich verengenden zentralen Extrusionskanal (3) in Verbindung ist und andererseits über mindestens eine ringförmige Lochblende (4) zur Vorexpandierung und/oder Verlangsamung mit mindestens einem koaxialen rohrförmigen, allgemein konischen, konvergierenden Extrusionskanal (5) in Verbindung steht, wobei der zentrale Extrusionskanal (3) und der koaxiale rohrförmige Extrusionskanal (5) eine zentrale Austrittsöffnung (7) bzw. eine ringförmige Austrittsöffnung (9) aufweisen, die zueinander konzentrisch sind, **dadurch gekennzeichnet, daß** die Öffnung der Lochblenden zur Vorexpandierung und/oder zur Verlangsamung und/oder der Austrittsöffnungen und/oder der Abstand zwischen den Ebenen der Austrittsöffnungen so einstellbar sind, daß durch gleichzeitiges Abschneiden eines aus der zentralen Austrittsöffnung austretenden zentralen Strangs und eines aus der ringförmigen Austrittsöffnung austretenden, koaxialen rohrförmigen Strangs ein Kern erzeugt wird, der von einem mit seinem Umfang fest verbundenen Ring umgeben ist.

2. Düse nach Anspruch 1 mit mehreren koaxialen rohrförmigen Extrusionskanälen, bei der die Öffnung der Lochblenden zur Vorexpandierung und/oder zur Verlangsamung und/oder der Austrittsöffnungen und/oder der Abstand zwischen den Ebenen der Austrittsöffnungen so einstellbar sind, daß durch gleichzeitiges Abschneiden eines aus der zentralen Austrittsöffnung austretenden zentralen Strangs und mehrerer aus mehreren konzentrischen ringförmigen Austrittsöffnungen austretender koaxialer rohrförmiger Stränge ein Kern erzeugt wird, der von mehreren jeweils miteinander fest verbundenen konzentrischen Ringen umgeben ist.

3. Extruder mit einem anggestreckten Mantel, der eine oder zwei Behandlungsschnecken und mindestens eine Extrusionsdüse nach einem der Ansprüche 1 und 2 enthält.

4. Extruder nach Anspruch 3, der mehrere Düsen und ein rotierendes Messer (13) aufweist, das sich an ihren Austrittsöffnungen dreht, und bei dem am Ende eines stromab gelegenen Teils des Mantels, der ein stromab gelegenes Ende der Behandlungsschnecke oder -schnecken enthält, eine mit dem Mantel fest verbundene Frontplatte (12) vorgesehen ist, in der eine Vorverteilungsöffnung (121) vorgesehen ist, die sich in eine Vorverteilungskammer (11) öffnet, die mit den Verteilungskammern (1) der Düsen über Versorgungslochblenden (6) in Verbindung steht.
